# EUROPÄISCHE PATENTANMELDUNG

(11) **EP 4 458 597 A2**
(43) Veröffentlichungstag der Anmeldung: **06.11.2024**
(21) Anmeldenummer: 24170840.3
(22) Anmeldetag: 17.04.2024
(51) Int. Cl.: B60K 11/08

(54) **VERSCHLUSSSYSTEM AN EINEM FAHRZEUG ZUM ÖFFNEN UND VERSCHLIESSEN VON ÖFFNUNGEN FÜR EINEN LUFTDURCHLASS**

(30) Priorität: 03.05.2023 DE 102023204091
(71) Anmelder: Magna Exteriors GmbH, 63877 Sailauf (DE)
(72) Erfinder: REUBER, Stefan, 57587 Birken-Honigsessen (DE)
(74) Vertreter: Rausch, Gabriele

(57) **Zusammenfassung**

Verschlusssystem an einem Fahrzeug zum Öffnen und Verschließen von Öffnungen (1d) für einen Luftdurchlass, wobei mindestens zwei Verschlusselemente (2) ebenso viele Öffnungen (1d) verschließen oder freilegen, wobei die mindestens zwei Verschlusselemente (2) gemeinsam bewegbar sind, wobei die Verschlusselemente (2) auf einem Verschlussträger (3) angebracht sind, der sich an den jeweiligen Endbereichen seiner Längserstreckung an Lagern (5) am Fahrzeug abstützt und über einen einzigen Aktuator (7) mit einem Getriebe und einem Hebeltrieb (6) um Anlenkpunkte (12a) am Fahrzeug verschwenkbar ist, dadurch gekennzeichnet, dass der Hebeltrieb (6) über eine Vierkantwelle (8) an den Endbereich des Verschlussträgers (3), der vom Aktuator (7) beabstandet ist, weitere Hebel antreibt.

## Beschreibung

Die Erfindung betrifft ein Verschlusssystem an einem Fahrzeug zum Öffnen und Verschließen von Öffnungen für einen Luftdurchlass, wobei mindestens zwei Verschlusselemente ebenso viele Öffnungen verschließen oder freilegen, wobei die Verschlusselement gemeinsam bewegbar sind.

### Stand der Technik

Verschlusselemente, z.B. in Form von Luftklappen werden für eine Vielzahl von Anwendungen für die gezielte Fluidzufuhr bei einem Fahrzeug verwendet, um die Regulierung von Luft, z.B. für die Luftzufuhr des Innenraums/ zur Klimatisierung des Innenraums des Fahrzeugs und die Kühlung des Motors oder anderen Antriebselementen zu gewährleisten. Zur Übertragung der durch ein oder mehrere Antriebselemente bereitgestellten Kräfte zum Bewegen und Stellen der Verschlusselemente sind in der Regel Getriebe erforderlich, welche in unterschiedlichster Form und Ausführung bekannt sind. Zumeist wird ein Verschlusssystem mit Getriebe für die Bewegungsübertragung von einem Antrieb auf ein Verschlusssystem verwendet. Sofern dieses Verschlusssystem aus zwei oder mehr Verschlusselementen besteht, tritt das Problem auf, dass der Kraftaufwand zur Bewegung der Verschlusselemente durch einen einzelnen Antrieb erschwert ist. Infolgedessen muss ein leistungsfähigerer Antrieb oder mehrere Antriebe verwendet werden, was mit höheren Kosten und mehr konstruktivem Aufwand verbunden ist.

Aus der DE 10 2017 107 240 A1 ist ein Verschlusssystem zum wahlweisen Öffnen und Verschließen eines Fluiddurchlasses bekannt, das wenigstens einen drehbaren Aktuator und wenigstens ein erstes Abtriebselement und ein zweites Abtriebselement umfasst, wobei der Aktuator und die Abtriebselemente jeweils wenigstens einen bogenförmigen Umfangsabschnitt aufweisen, wobei ein Umfangsabschnitt ein Eingriffsabschnitt ist, dadurch gekennzeichnet, dass der Eingriffsabschnitt des Aktuators geeignet ist, mit dem Eingriffsabschnitt des ersten und/oder des zweiten Abtriebselements im Eingriff zu stehen und wobei die Drehbewegung des Aktuators einen zeitlich gestaffelten/versetzten Eingriff zwischen dem Eingriffsabschnitt des Aktuators mit dem Eingriffsabschnitt des ersten Abtriebselements und zwischen dem Eingriffsabschnitt des Aktuators mit dem Eingriffsabschnitt des zweiten Abtriebselements bewirkt.

Aus der DE 10 2015 221 003 A1 ist eine Luftzufuhreinstellvorrichtung für ein Kraftfahrzeug mit mehreren Luftdurchgangsöffnungen bekannt, hinter denen ein Luftdurchgangskanal verläuft, und eine an einer Tragstruktur mittels zumindest eines starr mit der Klappe verbundenen Hebelarms schwenkbar gelagerten Klappe. Die Klappe ist zwischen einer geschlossenen Stellung, in der ein Luftdurchgang durch die Luftdurchgangsöffnungen minimal ist, und einer offenen Stellung, in der ein Luftdurchgang durch die Luftdurchgangsöffnungen maximal ist, um genau eine tatsächliche oder virtuelle Drehachse schwenkbar. Die eine schwenkbare Klappe verschließt in der geschlossenen Stellung die mehreren Luftdurchgangsöffnungen. Die Drehachse ist beabstandet zu den Luftdurchgangsöffnungen und damit zu einer Verschlussfläche der Klappe für die Luftdurchgangsöffnungen ausgebildet. Damit ist die Klappe durch ein Eingelenk drehbar gelagert.

Aus der DE 20 2022 101 234 U1 ist ein Schließklappensystem für ein Kraftfahrzeug mit einer Öffnung in einem Konturabschnitt einer Fahrzeugaußenhaut oder eines Fahrzeuginnenraums, sowie mit einer im Bereich der Öffnung schwenkbeweglich gelagerten Schließklappe zum Verschließen oder Freigeben der Öffnung bekannt. Es gibt eine Steuereinheit, die mit der Schließklappe in Wirkverbindung steht, um die Schließklappe zwischen einer Freigabestellung und einer Schließstellung zu verlagern, wobei die Steuereinheit einen durch elektrische Aktivierung längenveränderbaren Betätigungsdraht aufweist, der mit einem in zwei entgegengesetzten Richtungen beweglichen Steuerglied gekoppelt ist, das zur mechanischen Ansteuerung der Schließklappe vorgesehen ist.

Es ist Aufgabe der Erfindung, ein Verschlusssystem zum wahlweisen Öffnen und Verschließen eines Fluiddurchlasses bereitzustellen, das eine kraftsparende Bewegung und Arretierung von mehreren unterschiedlichen Verschlusselementen durch einen einzigen Antrieb ermöglicht.

### Beschreibung der Erfindung

Die Aufgabe wird gelöst mit einem Verschlusssystem mit den Merkmalen des Anspruchs 1.

Die Aufgabe wird speziell gelöst mit einem Verschlusssystem an einem Fahrzeug zum Öffnen und Verschließen von Öffnungen für einen Luftdurchlass, wobei mindestens zwei Verschlusselemente ebenso viele Öffnungen verschließen oder freilegen, wobei die Verschlusselement gemeinsam bewegbar sind, wobei die Verschlusselemente auf einem Verschlussträger angebracht sind, der sich an den jeweiligen Endbereichen seiner Längserstreckung an Lagerstellen am Fahrzeug abstützt und über einen einzigen Aktuator mit einem Getriebe und einem Hebelantrieb um Anlenkpunkte am Fahrzeug verschwenkbar ist und wobei der Hebeltrieb über eine Vierkantwelle an den Endbereich des Verschlussträgers, der vom Aktuator (7) beabstandet ist, weitere Hebel antreibt.

Durch die Verwendung eines Verschlussträgers, der sicher endseitig gelagert ist, werden die einzelnen Verschlusselement ohne verkanten bewegt.

### Beschreibung der Figuren

Figur 1 zeigt ein Frontabdeckung mit mehreren Verschlusselement von aussen
Figur 2 zeigt die Frontabdeckung von innen ohne Antrieb,
Figur 3 zeigt die Frontabdeckung von innen mit Antrieb,
Figur 4 zeigt einen Schnitt entlang A-A der Figur 3 mit geschlossenen Verschlusselementen,
Figur 5 zeigt einen Schnitt entlang A-A der Figur 3 mit geöffneten Verschlusselementen.

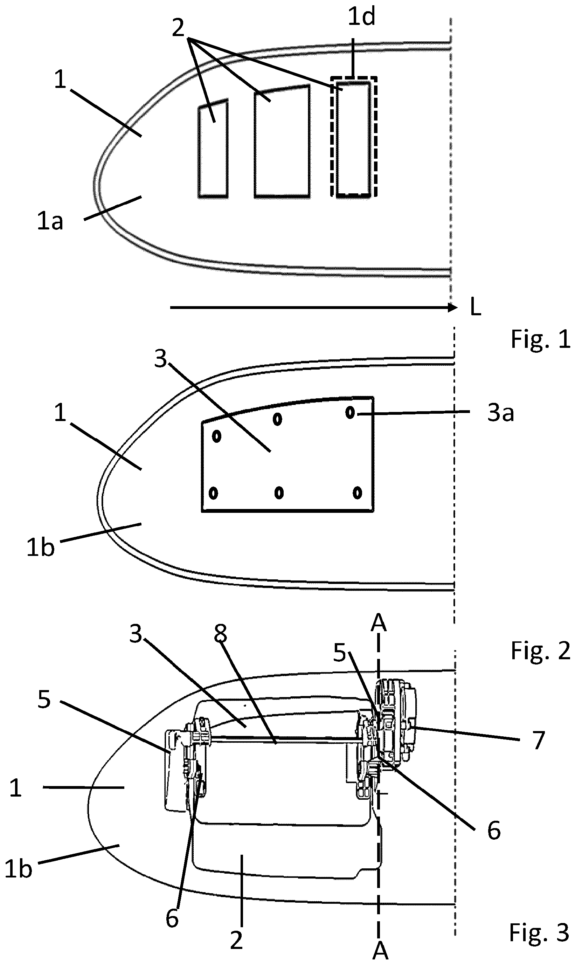

Figur 1 zeigt eine Frontabdeckung 1, wie sie in vielen Fahrzeugen im Bereich der Frontverkleidung verwendet wird. Die Frontabdeckung 1 der Figur 1 ist in einer Aufsicht dargestellt, die den Blick auf die Außenfläche 1a der Frontabdeckung 1 freigibt. Beispielhaft eingezeichnet sind Verschlusselemente 2 die entlang der horizontalen Erstreckung der Frontabdeckung 1 angebracht sind. Diese Verschlusselemente 2 schließen im geschlossenen Zustand Öffnungen 1d in der Frontabdeckung 1 und können zur Herstellung eines Luftstroms von den Öffnungen 1d entfernt werden.

Figur 2 zeigt die Frontabdeckung 1 in einer Ansicht auf die Innenfläche 1b. Die Verschlusselemente 2 sind in dieser Ansicht nicht zu sehen, da ein Verschlussträger 3 dargestellt ist, der an seinem Befestigungsstellen 3a die Verschlusselemente 2 trägt. Der Verschlussträger 3 verbindet die einzelnen Verschlusselemente, so dass bei einer Bewegung des Verschlussträgers 3 die Verschlusselemente 2 gemeinsam bewegt werden.

In der Figur 3 ist die Innenansicht auf die Innenfläche 1b der Frontabdeckung 1 mit Bauelementen dargestellt, die für die Bewegung der Verschlusselemente 2 auf dem Verschlussträger 3 dienen. In diesem Ausführungsbeispiel sind die Verschlusselemente 2 als eine Fläche dargestellt, die auf dem Verschlussträger 3 angebracht sind. Über Lager 5 ist eine Welle 8 gelagert, die über einen Hebeltrieb 6 und einen Aktuator 7 auf einer Seite angetrieben ist. Bei der Welle handelt es sich um ein Vierkantwelle. Nicht dargestellt ist eine seitliche Anbindung 3b des Verschlussträgers 3, die zur Anbindung an die Lager 5 dient.

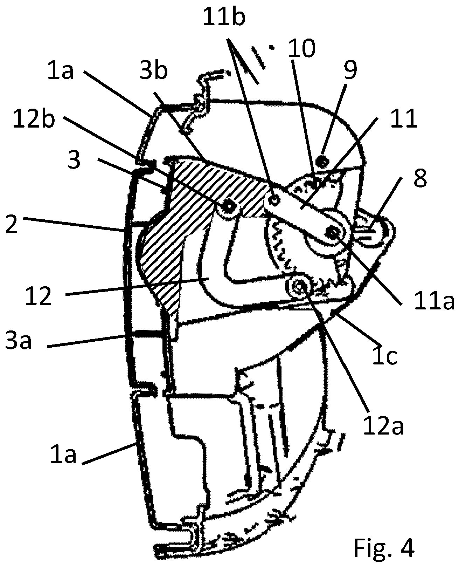

Figur 4 ist ein Schnittbild entlang der Linie A-A der Figur 3. Die Figur 4 zeigt die Verschlusselemente in einem geschlossenen Zustand. Die Verschlusselemente 2 fügen sich in diesem Schnitt sichtbar durch einen kleinen Spalt in die Frontabdeckung 1 ein. Die Verschlusselemente 2 sind an den Befestigungsstellen 3a mit dem Verschlussträger 3 verbunden, der in dieser Ausführungsform nicht plan, sondern mit einer Eindellung verläuft. An der jeweiligen Lagerseite sind seitlichen Anbindungen 3b angebracht, die wie ein Flügel in das Fahrzeuginnere reichen. Die seitlichen Anbindungen 3b weist zwei Anlenkpunkte 12b und 11b.

Am Anlenkpunkte 11b ist ein erster Hebel 11 angebracht, am Anlenkpunkt 12b ein zweiter Hebel 12. Der weitere Anlenkpunkt 11a des ersten Hebels 11 sitzt an der Welle 8 des Verschlusssystems. Ebenfalls auf der Welle sitzt ein Sternrad 10, das sich in etwa entlang eines Halbkreises erstreckt. In der Sternrad 10 greift ein Ritzel -das nicht dargestellt ist- ein, von dem Aktuator 7 angetrieben ist. Mit der Drehung des Sternrads wird der Hebel 11 verdreht und die seitliche Anbindung 3b über den zweiten Hebel 12 verschwenkt. Dabei dreht sich der zweite Hebel 12 um den Anlenkpunkte 12a, der in einer Seitenwand c der Frontabdeckung angebracht ist. Diese Seitenwand 1c der Frontabdeckung 1 erstreckt sich im Bereich des Lagers in das Fahrzeuginnere.

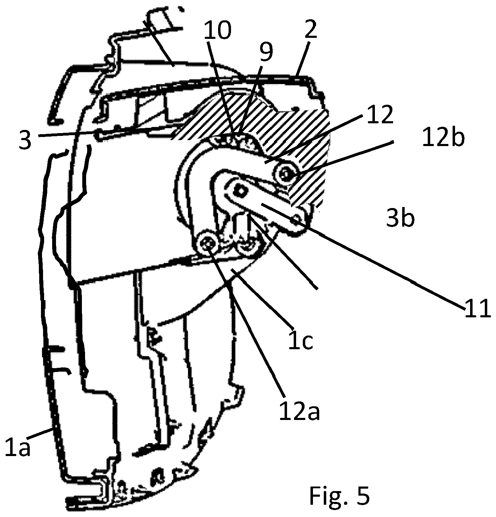

In Figur 5 ist die Situation dargestellt, nachdem das Verschlusselement 2 vollständig geöffnet ist. Das Verschlusselement 2 mit dem Verschlussträger 3 sowie das seitlichen Anbindung 3b liegt jetzt innerhalb des Fahrzeugs und gibt die Öffnung in der Frontabdeckung 1 frei.

### Bezugszeichen

1 Frontabdeckung
1a Aussenfläche der Frontabdeckung
1b Innenfläche der Frontabdeckung
1c Seitenwand
1d Öffnung
2 Verschlusselementen
3 Verschlussträger
3a Befestigungsstellen
3b Seitliche Anbindung
4 Antriebseinheit
5 Lager
6 Hebeltrieb
7 Aktuator
8 Welle
9 Antriebszahnrad
10 Sternrad
11 erster Hebel
11 a, 11b Anlenkpunkte
12 zweiter Hebel
12a, 12b Anlenkpunkte

## Patentansprüche

1. Verschlusssystem an einem Fahrzeug zum Öffnen und Verschließen von Öffnungen (1d) für einen Luftdurchlass, wobei mindestens zwei Verschlusselemente (2) ebenso viele Öffnungen (1d) verschließen oder freilegen, wobei die mindestens zwei Verschlusselemente (2) gemeinsam bewegbar sind, wobei die Verschlusselemente (2) auf einem Verschlussträger (3) angebracht sind, der sich an den jeweiligen Endbereichen seiner Längserstreckung an Lagern (5) am Fahrzeug abstützt und über einen einzigen Aktuator (7) mit einem Getriebe und einem Hebeltrieb (6) um Anlenkpunkte (12a) am Fahrzeug verschwenkbar ist, **dadurch gekennzeichnet, dass** der Hebeltrieb (6) über eine Vierkantwelle (8) an dem Endbereich des Verschlussträgers (3), der vom Aktuator (7) beabstandet ist, weitere Hebel antreibt.

2. Verschlusssystem nach Anspruch 1, **dadurch gekennzeichnet, dass** die Anlenkpunkte (12a) zur Verschwenkung an Seitenwänden (1c) einer Frontabdeckung (1) angebracht sind.

3. Verschlusssystem nach Anspruch 1 oder 2, **dadurch gekennzeichnet, dass** der Hebeltrieb (6) über ein Ritzel, das von dem Aktuator (7) angetrieben ist, und das in ein Sternrad (10) eingreift, antreibbar.
